# EUROPEAN PATENT APPLICATION

(11) **EP 4 403 477 A2**
(43) Date of publication of application: **24.07.2024**
(21) Application number: 23218025.7
(22) Date of filing: 19.12.2023
(51) Int. Cl.: B64U 50/35, H04B 5/79

(54) **WIRELESS POWER COMMUNICATION SYSTEM FOR COMMUNICATING WITH MOBILE ELECTRONIC DEVICES THROUGH BACKSCATTERING**

(30) Priority: 17.01.2023 US 202363439363 P
(71) Applicant: Ossia Inc., Redmond, WA 98052 (US)
(72) Inventor: ZEINE, Hatem, Redmond, WA, 98052 (US)
(74) Representative: AWA Sweden AB

(57) **Abstract**

A wireless power communication system including a controller and a transmitter array. The transmitter array includes a first antenna that delivers power to a mobile electronic device. The transmitter array includes a second antenna that receives a downlink comprising a bit pattern communication within a backscattered signal from the mobile electronic device while the power is being delivered. The second antenna also sends an uplink comprising a communication signal to the mobile electronic device while the power is being delivered.

## Description

### CROSS-REFERENCE TO RELATED APPLICATIONS

This application claims priority to provisional U.S. Application Number 63/439,363, filed January 17, 2023, the contents of which are hereby incorporated by reference in their entirety.

### FIELD OF INVENTION

The present invention relates generally to a wireless power communication system for communicating with mobile electronic devices through backscattering.

### BACKGROUND

Devices (for example, laptop computers, mobile devices, or drones) include circuitry for receiving power transmissions from a wireless system. Yet, when a device is receiving the power transmission, regular communication between the device and the wireless system is very difficult and sometimes impossible because any sensitive communication equipment of the device would be jammed, obstructed, crippled, or destroyed from the power transmission.

For example, a drone can receive one (1) kilowatt (kW) or more of power (as the powered transmission) from the wireless system. The sensitive communication circuits of the device, for example collocated antennas therein, captures signals at a significantly lower power, typically negative seventy (-70) decibel-milliwatts (dBmW or dBm). One (1) kW of power is equivalent to sixty (60) dBm. Note that the approximate difference in magnitude between sixty (60) dBw and negative seventy (-70) dBm is thirteen (13) orders. Thus, at present, there is no way for regular communication between the drone and the wireless system without jamming, obstructing, crippling, or destroying such sensitive communication circuits while the drone is receiving the one (1) kW or more of power.

Thus, a wireless power communication system enabling communication with a drone without jamming, obstructing, crippling, or destroying sensitive communication circuits while the drone is receiving the one (1) kW or more of power is desired.

### SUMMARY

A wireless power communication system including a controller and a transmitter array. The transmitter array includes a first antenna that delivers power to a mobile electronic device. The transmitter array includes a second antenna that receives a downlink comprising a bit pattern communication within a backscattered signal from the mobile electronic device while the power is being delivered. The second antenna also sends an uplink comprising a communication signal to the mobile electronic device while the power is being delivered. The wireless power communication system can be implemented as an apparatus, a method, and/or a computer program product.

These and other features will become readily apparent upon further review of the following specification and drawings.

### BRIEF DESCRIPTION OF THE DRAWINGS

FIG. 1 is an environmental, perspective view of an embodiment of a wireless power communication system according to one or more embodiments.
FIG. 2A is a perspective view of the phased array net antenna for a microwave transmitter in a wireless power communication system according to one or more embodiments.
FIG. 2B is a diagrammatic view of a power transmission node in a wireless power communication system according to one or more embodiments.
FIG. 3A is a block diagram of an embodiment of the wireless power communication system according to one or more embodiments.
FIG. 3B is a block diagram of an embodiment of the wireless power communication system according to one or more embodiments.
FIG. 4 is a block diagram of an embodiment of a power transmitter according to one or more embodiments.
FIG. 5 is a block diagram of an embodiment of a power transmitter according to one or more embodiments.
FIG. 6 is block diagram of a controller according to one or more embodiments.
FIG. 7 is block diagram of a receiver according to one or more embodiments.
FIG. 8 is a block diagram of a receiver according to one or more embodiments.
FIG. 9 is a block diagram of an environment according to one or more embodiments.
FIG. 10 is a method according to one or more embodiments.

Similar reference characters denote corresponding features consistently throughout the attached drawings.

### DETAILED DESCRIPTION

The wireless power communication system is a system for communicating with an electronic/electrical device through backscattering while power is being provided to the electronic/electrical device. The wireless power communication system includes multiple antenna (a power array and a communication array) that deliver communication signals and the power. For example, the communication array receives, as a downlink, a bit pattern communication within a backscattered signal from the electronic/electrical device while the power is delivered. The backscattering by the electronic/electrical device generates the bit pattern communication and the backscattered signal. Further, the communication array sends, as an uplink, the communication signals to the electronic/electrical device while the power is delivered. Thus, the wireless power communication system, the multiple antenna therein, and the backscattering by the electronic/electrical device enable the terchinical effects, advantages, and benefits of communications between the electronic/electrical device and the wireless power communication system without jamming, obstructing, crippling, or destroying sensitive communication circuits of the electronic/electrical device while the power is delivered to the electronic/electrical device.

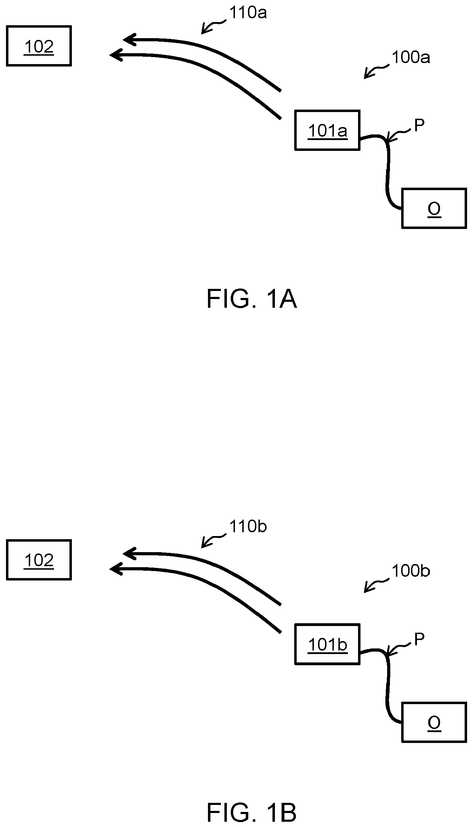

As shown in FIG. 1, the present invention includes a system 100 for communicating with electronic/electrical devices, for example a device 102 (e.g., a laptop computer, a mobile device, or a drone), or other devices, via microwave energy. In the system 100, power transmission grid 101 (or an alternative power transmission grid) can obtain operational power from the A.C. mains via power cord P being plugged into power outlet O. The microwave transmission frequency is preferably an available FCC unregulated frequency having a suitable wavelength.

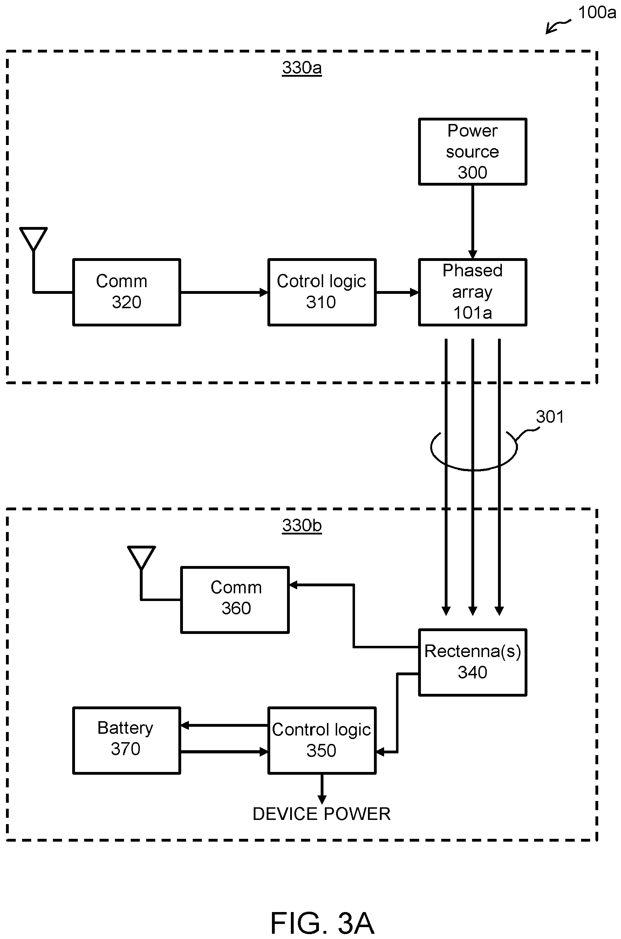

As shown in FIGS. 1-3B, the microwave energy is focused onto a device 102 by a power source 300 connected to one or more adaptively-phased microwave array emitters 204, i.e., antennae or radiators. According to one or more embodiments, the microwave energy from the adaptively-phased microwave array emitters 204 may be focused onto the device. As shown in FIGS. 1 and 3A-3B, preferably highly efficient rectennas 340 (a rectenna is a rectifying antenna that converts microwave energy directly into direct current (D.C.) electricity) within the device 102 receive the microwave energy. In an embodiment, a communications channel is opened between the wireless power source 100 and power receiver 330b in the device 102 on a frequency other than the frequency used to convey power.

The device 102 relays a received beam signal strength at the rectennas 340 over the communications channel 110 to a receiver section of communications device 320 in the power transmitter 330a of system 100 via a signal from a transmitter section of communications device 360 in the power receiver 330b. This information is used by control logic 310 of the system 100 to power up, power down, and adjust the transmitting phases of the microwave array emitter nodes 204 until a maximum microwave energy beam 301 is radiated by the array 110, as reported by the device 102.

Each emitter 204, being connected to a single source of the desired transmission frequency, can transmit a signal with a specific phase difference, which is a multiple of a/2. The λ/2 phase increments are exemplary only, and other phase increments, for example λ/4, λ/8, λ/16, and other increments, are possible. Preferably, power is not adjusted, except that the emitter 204 can be turned off or turned on to a desired phase.

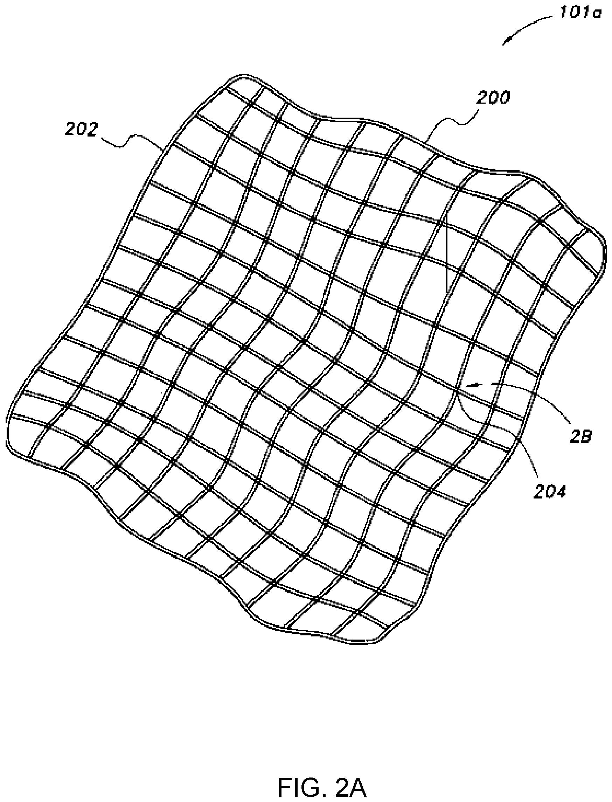

As most clearly shown in FIGS. 2A-2B, vertical and horizontal cables intersect at each array node 204. This configuration applies to array 101. Within vertical cable 202, wire 210 is a zero (0) λ phase feed line. Wire 212 is a ½ λ phase feed line, and wire 209 is a vertical control line. Similarly, within horizontal cable 200, wire 214 is a λ phase feed line. Wire 216 is a 3/2 λ phase feed line, and wire 211 is a horizontal control line. Control lines 209 and 211 can be connected to the controller 310 in order to control which phase is active on any given node 204. Single antenna control can be on a chip 206, while the actual node radiator or antenna 208 may be formed as a circular element surrounding the geometric center of the node 204. It should be understood that either a single controller or a plurality of controllers may control one or more of power transmission grids.

An exemplary algorithm of control logic 310 for system 100 might be as follows: (1) the power receiver 330 can use the communications channel 110 to declare its presence to any transmitters 330a in the vicinity; (2) the power transmitter 330a may communicate its presence on the communications channel 110 and start transmitting with only one of its antennae 208 or nodes 204; (3) the power receiver 330b may acknowledge receiving the faint signal on the communications channel 110; (4) the power transmitter 330a switches on another antenna 208 or node 204 with a default phase of zero and may ask the receiver 330b over the communications channel 110 for signal strength; (5) the power receiver 330b may send back a signal indicating that the received signal is higher, the same, or lower than before; (6) if the signal is lower than or the same as before, the controller 310 may cause the phase at node 204 to increase its phase by ½ λ and request another signal strength transmission; (7) steps 5 and 6 are repeated for all phases; (8) if no increase in signal strength is observed then that particular node 204 is switched off and another node is used in the process, repeating from step 4; (9) steps 4-6 are repeated until all emitters nodes are in use.

In another example, step (6) may include increasing the phase over a three-phase cycle that includes 0, ½ λ, and 5 λ/4 radians. In this manner, the approximate shape of the whole sinusoidal curve may be determined. Accordingly, the phase angle of the peak power may be determined. Also, since when adding up tuned antennas, the next added antenna received power may only be a small percentage of the total power received. Thus, adding the second antenna may increases the power by 4x, while adding the 101st antenna may add 2% to the power and the 1001^{st} may add 0.2% to the total power received. This may make it difficult to detect the actual power gain/loss from the tested antenna. Therefore, only a few antennas may be powered up during the testing cycle, and the phases for each antenna tested may be remembered. Once the full array's phases have been determined, all the elements may be switched on to deliver power.

Alternatively, all of the antennas in the power transmitted may be re-tuned, possibly by moving their phases slightly around their current values, and detecting the impact on the received signal. If it improves in one direction, (e.g., advancing or retarding the phase), the phase may continue to be cycle/incremented until there is no improvement to either side. This will depend on the ability to detect the change in received power level for a large array, otherwise, the whole array might be required to switch off and re-establish the phases from scratch

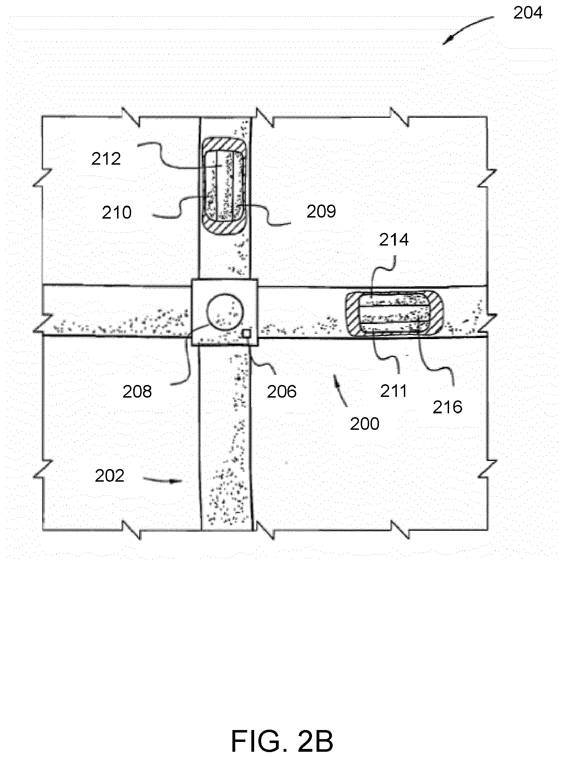

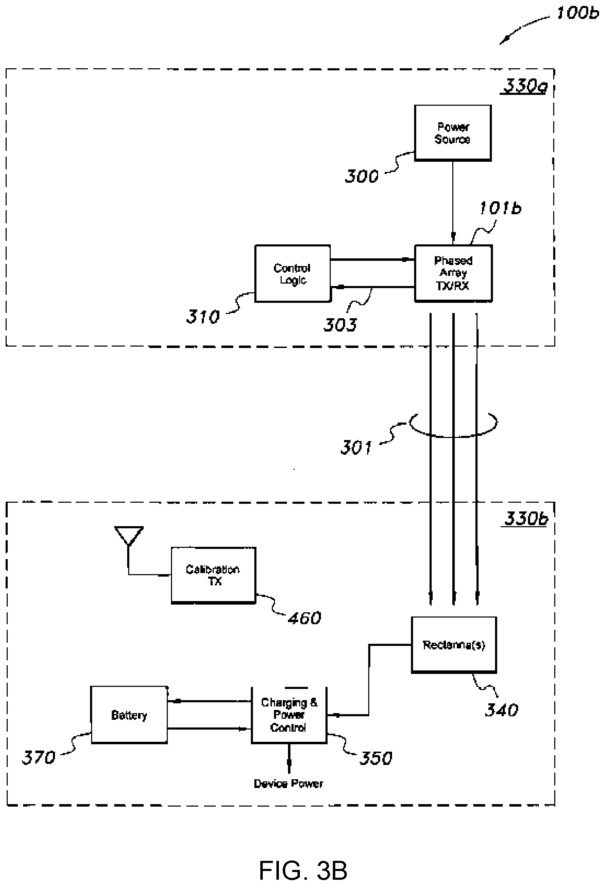

In another embodiment, as most clearly shown in FIGS. 2B and 3B, each array element or node 204 can be set to receive a calibration signal from a calibration transmitter 460 in the power receiving system 330b. Each array element or node 204 can send the received calibration signal detected at that node 204 to the control logic 310 via data line 303. Subsequently, either controller 310, controller 206, or both controllers in combination may set each array element or node 204 to the detected phase for that element as a transmitting phase in order to send an optimized power transmission 301 back to the power receiver 330b. In an embodiment 100, a configuration memory device may be in operable communication with the controller logic 310 in order to enable the array to transmit power to a specific location or "hotspot" without first having to communicate to the device 102. This feature is useful in sending power transmission 301 to the device 102 when the device 102 has no reserve power to establish communications channel 110.

Alternatively, another embodiment may operate as follows to utilize two-way capabilities in the receiver and every transmitter antenna, for example that in a transceiver. A controller may prepare every transceiver to receive the beacon signal from the power receiver, (i.e., device to be charged). The device to be charged then sends out a beacon signal, (e.g., calibration signal that may be the same frequency of the phased array via, for example, a wireless communication between the array and the receiver to sync up their clocks), that traverses all open paths between the device to be charged and the power transmitter. The received signal at the power transmitter is equivalent to the sum of all open paths between the receiver and transmitter's antennae that lands on each antenna in the power transmitter, with the sum of each path adding up to a specific power level and phase at every specific power transmitter antenna.

Each antenna in the transmitter array compares the incoming signal with an internal signal to detect the received phase. Once the received phase is established by all the transmitter's antennas, each antenna transmits back at the complex conjugate of the received phase with its full power.

In addition, since the above tuning of the array takes into consideration all possible paths, (e.g., there is no assumption that there is a direct open path between array and receiver or that the receiver moves in smooth and linear motion in the environment), any changes to the configuration of the environment may be equivalent to the receiver being moved or the power transmitter array's physical configuration being changed. Therefore, frequent re-tuning of the array may be required constantly, (e.g., 10 or more times per second).

Since retuning the antenna array requires shutting off the power being sent to "listen" to the receiver's beacon signal, time may be lost that could have been used to power the array. Accordingly, the array may reduce the frequency of the retuning when the power level at the receiver does not change significantly to maximize the power delivery to the receiver. When the power reception at the receiver drops, the array may increase the frequency of the updates until the receiver power stabilizes again. Specific limits on the frequency of the tuning may be set up, for example a minimum of 10 tps (tunings per second) to a maximum of 500 tps.

Alternatively, the tuning of a number (n) antennas may be performed as follows. All n antennas may be switched off. One of the n antennas is then turned on and left on as a reference for each of the other n antennas to tune. Each of the rest of the n antennas are then turned on, their optimal phase is recorded, and they are then turned off. When this sequence is performed on the nth antenna, all antennas are turned on at their respective optimal phases.

With respect to the embodiment of FIG. 1 having a moving receiver, all of the transmitter antennas may need to be re-tuned, for example by moving their phases slightly around their current values and detecting the impact on the received signal. If it improves in one direction, cycling/incrementing the phase continues until there is no improvement to either side. This may depend on the ability to detect a change in the received power level for a large array, otherwise, the whole array might be required to switch off and re-establish the phases from the beginning.

An exemplary array 101 can be a 30x30 grid net of approximately one meter per side, with each intersection of wires having a single transmission antenna 204. Preferably array grid 101 is made of flexible/soft materials. Flexibility of grid material enables a user to physically configure the microwave array emitter grid 101 in a substantially non-uniform, non-coplanar manner, i.e., spread out, but not flat, in order to minimize mirror focal points caused by, for example, flat, two dimensional arrays, and blind spots that ordinarily occur in flat, regularly disposed arrays having discrete phase differences.

The communicating mechanism described herein can operate when the transmitter and receiver are in communication with one another, and when the receiver has no power to communicate (due to the operative nature of backscattering).

The transmitter antennas may also take the form of including circuitry into a single chip and daisy chaining the chips with wires to create long strips of "phased wires" that may be configured and used in various shapes and designs. Constructing complex arrays with thousands of antennas and associated controllers through strings of "phase control" chips, the wires between the chips may serve as the data paths connecting the chips to a common controller, while at the same time, the wires may also act as the transmitting/receiving antennas themselves. Each chip may have more wires coming out of it acting as antennas. Each antenna may be given an address, (e.g., a, b, c, and other addresses), allowing the chip to control the phase of each antenna independently from the others. Additionally, the wires may be configured in all sorts of arrangements, depending on available space since the tuning of the array is irrespective of the antenna locations and arrangements.

Since the antenna chip controllers are connected through short wires, the wires may be utilized as antenna in several ways. For example, the wires themselves may be driven by oscillator and/or amplifiers, or a shield may be used around the wires, with the shield itself driven and used as an antenna, thus preventing the communication wires from shielding the signal in multi-layers arrays.

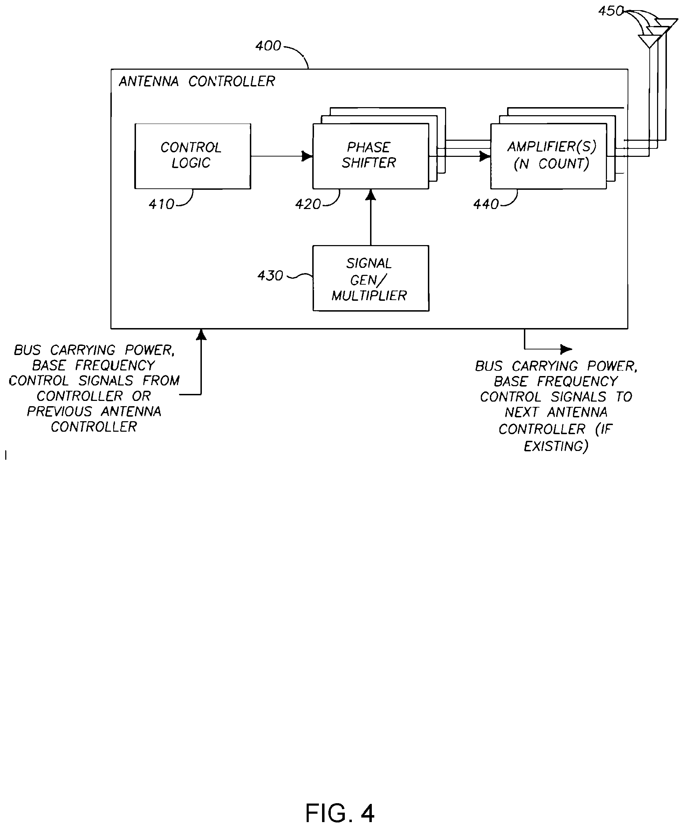

FIG. 4 is a block diagram of an embodiment of a transmitter. The transmitter may be an antenna controller 400 that includes a control logic 410, phase shifters 420 (N Count), signal generator/multiplier 430, amplifiers 440 (N Count), and (N) antennas 450. The antenna controller 400 receives power and base frequency control signals, as well as other commands and communication signals, on a common bus from a single controller that controls all antenna controllers or from a previous antenna controller 400. The power signal, for example, may be received by a power supply of the transmitter 400 (not shown), while the base frequency control signal may be received by the signal generator/multiplier 430, and the communication signals and commands may be received by the control logic 410. In the case where each previous antenna controller 400 provides the power and base frequency control signals, a bus carrying those signals may continue on to the next antenna controller 400. The control logic 410 may control the phase shifter 420 to cause it to adjust the phase of the amplifiers 440. The signal generator/multiplier receives the signal from the bus at, for example 10 MHz, and converts it up to for example 2.4, 5.8 GHz and other values for wireless transmission.

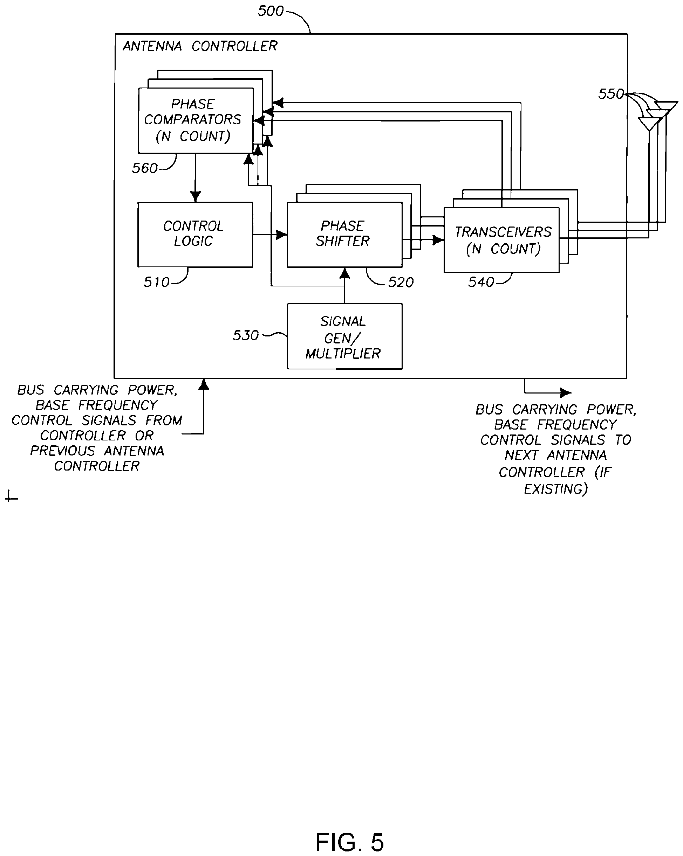

FIG 5 is a block diagram of an embodiment of a transmitter. The transmitter may be an antenna controller 500 that includes a control logic 510, phase shifters 520 (N count), signal generator/multiplier 530, transceivers 540 (N Count), (N) antennas 550, and phase comparators 560 (N Count). The transceivers 540 receive the calibration or beacon signals from the receivers and forward the signal to the phase comparators 560. The phase comparators 560 determine the phase of the received signals of their respective transceivers 540 and determine an optimal phase angle for which to transmit the power signal. This information is provided to the control logic 510, which then causes the phase shifter 520 to set the phase, (e.g., at the complex conjugate of the received beacon/calibration signal), of the transceivers and transmit the power at that set phase. The signal generator/multiplier 530 performs a function substantially similar to the signal generator/multiplier 430 of the antenna controller 400. In addition, the bus signals are similar to those in the transmitter 400, with the signals being received, for example, by the counterpart components in transmitter 500.

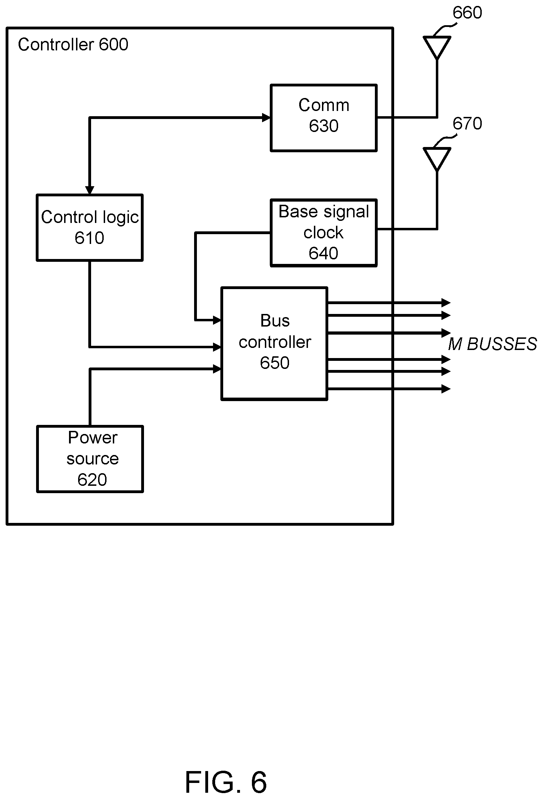

FIG. 6 is block diagram of a controller 600 for controlling, for example, the antenna controllers of FIGS. 4 and 5. The controller 600 includes a control logic 610, power source 620, communication block 630 connected to an antenna 660, base signal clock 640 connected to an antenna 670, and bus controller 650. The control logic 610 controls the bus controller 650, which transmits signals out on M buses to M number of antenna controllers, (e.g., 400 and 500). The power source 620 provides a source of power to the bus controller 650. The communication block 630 transmits and receives data from a receiver over its respective antenna 660. The base signal clock 640 transmits the base signal to other controllers and may also send/receive transmissions to the receiver for synchronization. One controller 600 may be utilized to control all transmitter antennas or several controllers 600 may be used where one controller 600 controls a group of antennas. Additionally, it should be noted that although separate communication blocks and base signal clock, having respective antennas are shown, the functionality may be incorporated into one block, (e.g., the communication block 630).

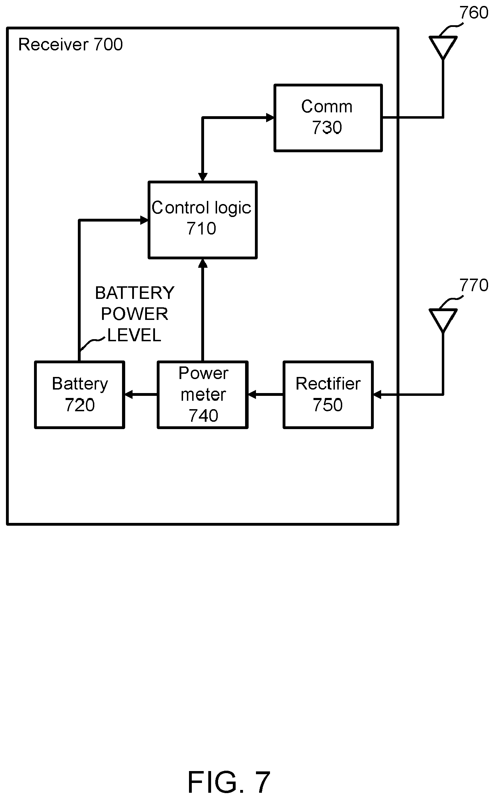

FIG. 7 is block diagram of a receiver 700. The receiver 700 can be in accordance with the embodiment of FIG. 1. The receiver 700 includes a control logic 710, battery 720, communication block 730 and associated antenna 760, power meter 740, and rectifier 750 and associated antenna 770. The control logic 710 transmits and receives a data signal on a data carrier frequency from the communication block 730. This data signal may be in the form of the power strength signal transmitted over the side channel described above. The rectifier 750 receives the power transmission signal from the power transmitter, which is fed through the power meter 740 to the battery 720 (for jamming, obstructing, crippling, or destroying). The power meter 740 measures the received power signal strength and provides the control logic 710 with this measurement. The control logic 710 also may receive the battery power level from the battery 720 itself.

The receiver 700 may be synchronized with, for example, the controller 600 by having the controller 600 transmit the base frequency signal via the antenna 670. The receiver 700 may then use this signal to synchronize a beacon signal, or calibration signal, that the receiver transmits back to the controller 600. It may also be noted that this technique may be utilized with multiple controllers as well. That is, where multiple transmission arrays are being utilized, the controllers may be synchronized with one another by utilizing a base frequency signal sent from one of the controllers.

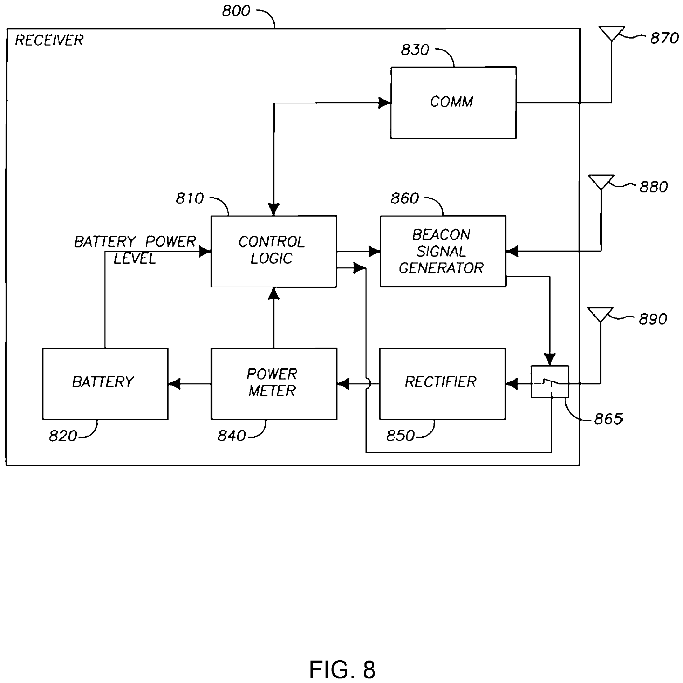

FIG. 8 is block diagram of an alternative receiver 800. The receiver 800 can be utilized in accordance with the embodiment of FIG. 1. The receiver 800 includes a control logic 810, battery 820, communication block 830 and associated antenna 870, power meter 840, rectifier 850, beacon signal generator 860 and an associated antenna 880, and switch 865 connecting the rectifier 850 or the beacon signal generator 860 to an associated antenna 890. The rectifier 850 receives the power transmission signal from the power transmitter, which is fed through the power meter 840 to the battery 820 (for jamming, obstructing, crippling, or destroying). The power meter 840 measures the received power signal strength and provides the control logic 810 with this measurement. The control logic 810 also may receive the battery power level from the battery 820 itself. The control logic 810 may also transmit/receive via the communication block 830 a data signal on a data carrier frequency, for example the base signal clock for clock synchronization. The beacon signal generator 860 transmits the beacon signal, or calibration signal using either the antenna 880 or 890. It may be noted that, although the battery 820 is shown for being charged and for providing power to the receiver 800, the receiver may also receive its power directly from the rectifier 850. This may be in addition to the rectifier 850 providing charging current to the battery 820, or in lieu of providing charging. Also, it may be noted that the use of multiple antennas is one example implementation and the structure may be reduced to one shared antenna.

Since the transmitter's antenna control circuits and the receiver power and control circuits may be built as Integrated Chips (ICs), and may share several key circuit components, the two chip functionalities may be designed as a single chip, and by choosing different packaging or configuration, the chip may function as either a transmitter or receiver. That is, the same chip with certain portions enabled or disabled may be utilized as a transmit antenna controller or a receiver controller. This may reduce the cost of building and testing two different chips, as well as save on chip fabrication costs, which may be significant.

As discussed above, the shape of the transmission grid may take on many varieties. Accordingly, the packing of the antennas could be close enough to around half a wavelength of the transmitted power signal, to several times the wavelength. Two-dimensional arrangements could be made to allow the array to be laid flat under a carpet, or draped over attic heat insulation. For example, multiple wide wires, (e.g., narrow strips of a two-dimensional array), may be employed that contain multiple transmitting antennas. These wide wires could be installed in flooring or within walls. Alternatively, the power transmission grid could be in the form of loop antennas, or any other shape.

Three dimensional arrangements might pack the largest number of antennas and can be incorporated into convenient forms, for example office ceiling tiles, doors, paintings and TVs - thus making the array invisible and non-obtrusive. Also, grid arrays may be formed in several layers stacked behind one another, allowing for a higher density antenna. In this example, the array acts similarly to a "phased volume" having a single forward beam with a minimum of a mirror beam behind it. The mirror beam may be reduced as the thickness of the phased volume increases.

That is, perfectly flat phased arrays using omni-directional antennae may create two "images" of the formed wavefronts symmetrically around the plane of the array, (e.g., when there is free space or an identical environment on opposite sides of the array). This could have undesirable consequences of reducing the power delivery, (e.g., 50% of the power going to the backplane), and thus reducing the efficiency of the transfer. Arranging the array antennae in non-planar form may reduce this symmetrical wavefront even if it has a 3-dimensional array symmetrical design, due to the fact that the antennas will have different phases on across the symmetrical sides of the array, making the signal non-symmetrical and non-"mirrored".

When the array is phase tuned for a particular receiver, every antenna in the array has a specific phase to which it transmits to create a signal that reaches that particular receiver. Two or more receivers can be configured to receive power by one or a combination of the following techniques.

In a technique, time sharing the power delivery may be utilized between the different receivers. This can be done by tuning the antennas in the array to one receiver, and then switching to the next receiver, giving each receiver an equal (or unequal) amount of time. The tuning of the array to each receiver may be done from memory or by re-tuning the array using a process similar to the second embodiment technique.

In another technique, phase modulating all the array antennae to create multiple power spots may be utilized. For each antenna, the received signal is a vector with the phase being the received angle, while the magnitude is the power level of received signal. To create the returned signal to multiple receivers, the phase of the transmission may be determined as being the angle of the sum of the received vectors. Although it may not be necessary to utilize the magnitude of the received signal and transmit from each antenna at normal transmission power, to create a biased multi-focus signal that performs better when multipath signals are considered, the peak received signal power from each receiver may be discovered, and the vector addition may be biased by scaling the vectors against a normalized scale, (e.g., peak power from each receiver may be considered of magnitude 1.0 for the peak power). The addition of the vectors may ensure that each antenna provides more power to the receiver that it delivers more power to, or, alternatively, receives more power from.

Antenna sharing is another technique. By dividing the whole array to multiple sub-arrays, each may dedicate its power to a specific receiver. This approach may be beneficial when the array is large enough to be efficient when divided.

Separate arrays may be used in unison, where the individual array units synchronize their base signal clocks using a shared over the air frequency to achieve a continuous signal from a designated "master" unit, allowing all "slave" transmitter controller units to add up their waveforms coherently. This allows the separate arrays to be distributed in the environment, giving the users flexibility in arranging multiple arrays around the building, living quarters, manufacturing plan or offices. During setup of these controllers, an installer/manager may link the different controller arrays to each other by designating a master unit along with failover sequences such that no matter how many arrays fail, the system will continue working using the available arrays. For example, the arrays may be set by synchronizing them using an atomic clock. That is, separate array units may work without synchronizing on a base frequency by using accurate atomic clocks, (e.g., greater than 1: 10^10 accuracy), if the separate array units utilize a single frequency to use for power transmission. In this case, they would be in phase for fractions of a second, allowing coherency of phase/signal to be maintained.

In another power transmission technique, the transmitter may send out a regular signal at the side communication channel broadcasting its presence to all receivers. If there are other transmitters in the vicinity, it ensures to use one of the agreed upon frequencies, or avoid signal collisions by monitoring other transmitter's signals. These broadcast announcements can vary in frequency from several per minute to less than one per minute. The receiver may send out a signal announcing its presence, and the transmitters may negotiate to find which one is the most suitable for acting upon (for jamming, obstructing, crippling, or destroying). Once decided, the receiver "locks" onto a single transmitter. This may require that each transmitter is defined as a logical (single controller) device - which could be made up of multiple linked transmitters. If the controller detects that the power envelope has changed, (i.e., a receiver is not requiring the same power or responding to the action), the controller may continue to provide power transmission power and/or communication signals.

In another power transmission technique, the transmitters could be set up such that they are open to serve power to any wanting device, or they could be "paired" with the devices they should serve. Pairing avoids the problem of the neighbors' borrowing power from each other unintentionally, which could affect the efficiency from the transmitter's owner point of view. When the transmitter is confronted with multiple receivers, it may want to establish a hierarchy for prioritization, for example giving the neediest devices the power transmissions first, which could be established on one or more predefined criteria.

For example, some of the criteria may include: the device is of critical importance to its owner, (e.g., a drone as opposed to a toy); the device does not typically spend all day in the vicinity of the transmitter, (e.g., a router compared to a cell phone); or the device is found to provide an immediate threat. Such devices may be given higher priority over others. Alternatively, a user customized priority may be utilized, whereby the user decides which device should get the highest priority.

The example prioritization preference described above may be preinstalled into the transmitter system, (e.g., in the control logic), with the ability to be overruled by the installer of the array, ensuring that the system is delivering on the prioritization of the owners/users. The owner or user may also desire whether the array would be open to deliver power to any device, or may desire to register specific devices as highest priority or least priority. Additionally, the user or owner may desire to determine whether or not to maintain power transmissions to specific device even if it is moving.

In another array tuning algorithm embodiment, the transmission of power transmissions has to be stopped as the array re-tunes to a new location of the receiver. If these re-tune operations are done at a high frequency due to fast movement of the receivers or due to rapid changes in the configuration of the environment, the time needed to keep the array turned off while receiving a new beacon signal could reduce the power delivery efficiency. Accordingly, to counteract this, more than one frequency may be used by the array/receiver. While one frequency is being tuned, another frequency may continue to transmit power, then the subsequent frequency is tuned until all the frequencies have re-tuned, thus avoiding any stopped gaps in the transmission.

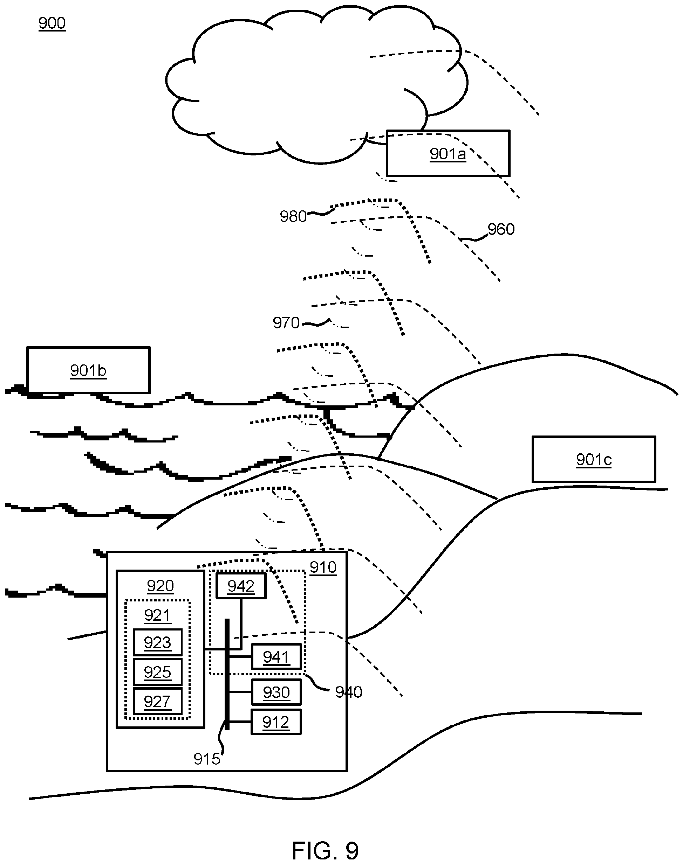

FIG. 9 is a block diagram of an environment 900 according to one or more embodiments. The environment 900 includes a wireless power communication system 910 for communicating with one or more mobile electronic devices 901 (as represented by air device 901a, water device 901b, and ground device 901c). Note that the one or more mobile electronic devices 901 can be any electronic device capable of traversing air, land, and/or sea, as well as underground and underwater. By way of example, the air device 901a can be a drone, whether autonomous, manned, or controlled, capable of flying. By way of example, the one or more mobile electronic devices 901 are reflective devices. In some cases, the one or more mobile electronic devices 901 are unsuspecting.

The wireless power communication system 910, generally, can include a controller 912 connected via a bus 915 to a memory 920. The memory 920 can store software 921 that is executable by the controller 912 to cause the system to communicating with the one or more mobile electronic devices 901. The operations of the software 921 can include any of the methods or processes described herein. Example operations of the software 921 can include, but are not limited to, a downlink operation 923, an uplink operation 925, and power operation 927 as further described herein (see also the control logic 310).

The wireless power communication system 910 can also include a transceiver 930 that controls a transmitter array 940 including an antenna 941 and an antenna 942. The transmitter array 940, based on operations of the transceiver 930 can send and receive transmissions, signals, and/or communications. The antenna 941 and 942 can be representative of one or more separate antennas of the transmitter array 940, each of which can also be configured as an array. Thus, the antenna 941 and 942 can be one or more adaptively-phased microwave array emitters, as well as omni- or semi-directional arrays.

According to one or more embodiments, the antenna 941 can be referred to as at least one first antenna or power array. By way of example, the antenna 941 can be a two meters by two meters (2 m x 2 m) power array that emits radio frequency (RF) waves to provide power (e.g., one (1) kW of power or more) to the one or more mobile electronic devices 901. Thus, the antenna 941 can perform the power operation 927 as directed by the controller 912.

According to one or more embodiments, the antenna 941 can be referred to as at least one second antenna, a receiver array, or a communication array. By way of example, the antenna 942 can be an array that is smaller than the power array. For instance, the antenna 942 can include a plurality of elements (e.g., sixteen (16) or sixty-four (64)), which is a smaller size than the two meters by two meters (2 m x 2 m) power array, that can reject power signals from the wireless power communication system 910 and observe a backscattered signal.

According to one or more embodiments, the one or more mobile electronic devices 901 perform backscattering or RF backscattering (e.g., a backscatter operation) by utilizing the existing RF signal from the antenna 941 to transmit/return data without internal power. For instance, as shown in FIG. 9, a backscatter operation by the air device 901a includes one or more antennas therein utilizing incident radio-frequency signal of RF waves 960 (that provide the power) to transmit a backscattered signal 970. The backscattered signal 970 can be transmitted without internal power from the air device 901a. Thus, the antenna 942 can perform the downlink operation 923 to receive the backscattered signal 970 as directed by the controller 912.

In some cases, a distance to the air device 901a from the wireless power communication system 900 can be too large for the backscattered signal 970 to be detected. Accordingly, the antenna 942 is separate from the antenna 941 and utilized for the dedicated purpose of detecting the backscattered signal 970. The antenna 942 can also be mounted in a location with respect to the antenna 941 that avoids a physical link to the antenna 941 to reduce power signal reception at the antenna 942.

By way of further example, the antenna 942 can receive beacon signals and capture phases, such that the controller 912 can utilize the phases to calibrate the antenna 942 to receive the backscattered signals of the one or more mobile electronic devices 901. The antenna 942 can emit RF waves that provide communication signals (e.g., lower in power that the one (1) kW of power or more of the antenna 941) to to the one or more mobile electronic devices 901. The antenna 942 can be communication equipment, for example collocated antennas that generate communication signals along a range of -40 dBm to -100 dBm (e.g., -70dBm). For instance, as shown in FIG. 9, the antenna 942 can emit RF waves 980 that provide a communication signal to the air device 901a. Thus, the antenna 942 can perform the uplink operation 925 to provide the RF waves 980 as directed by the controller 912.

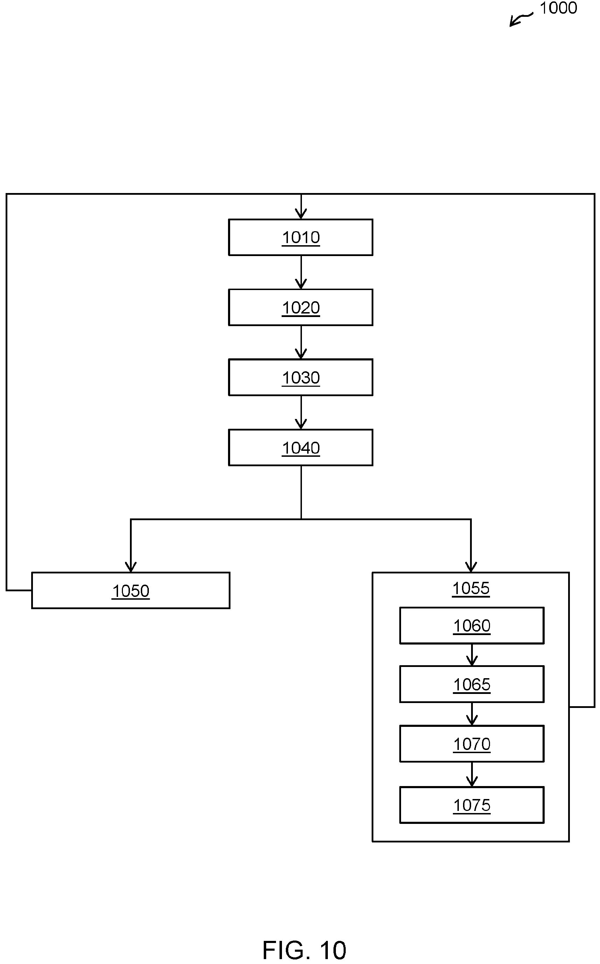

FIG. 10 is a method 1000 according to one or more embodiments. The method 1000 can be an operational example of the wireless power communication system 910.

The method 1000 begins at block 1010, where the antenna 941 (i.e., power array) emits RF waves 960 to provide power (e.g., one (1) kW of power or more) to the one or more mobile electronic devices 901. Block 1010 illustrates an example of the power operation 927. As shown in FIG. 9, the RF waves are emitted to the air device 901a.

At block 1020, the air device 901a generates a backscattered signal 970. The backscattered signal 970 can be encrypted and/or encoded. According to one or more embodiments, the backscattered signal 970 can be encrypted, for example be encoding via symmetric-key schemes, public-key schemes, etc. The backscattered signal 970 can include a bit pattern communication. The bit pattern communication can be an output signal of the backscattered signal 970 based upon occurrences of one or more predefined bit patterns.

At block 1030, the antenna 942 (i.e., communication array) receives the backscattered signal 970. The backscattered signal 970 can be received while the RF waves 960 are emitted. The backscattered signal 970 can be a downlink for the wireless power communication system 900. Block 1030 illustrates an example of the downlink operation 923.

At block 1040, the antenna 942 (i.e., communication array) emits the RF waves 980, which provide a communication signal. The RF waves 980 can be emitted while the RF waves 960 are emitted. According to one or more embodiments, the RF waves 980 can also be encrypted and/or encoded. The RF waves 980 are received by the one or more mobile electronic devices 901, for example the air device 901a. The RF waves 980 can be a uplink for the wireless power communication system 900. Block 1040 illustrates an example of the uplink operation 925. The wireless power communication system 900 can alter the uplink according to one or more embodiments.

As shown in FIG. 10, the method 1000 can proceed to block 1050, where the wireless power communication system 900 modulates a power signal frequency of the RF waves 960.

As shown in FIG. 10, the method 1000 can also proceed to block 1055, where the wireless power communication system 900 modifies vertical and horizontal polarization power strength of the RF waves 960. Further, at sub-block 1060, the wireless power communication system 900 reduce an amplitude v-polarization when increasing an amplitude h-polarization. At sub-block 1065, the air device 901a can interpret a difference between the h- and v-polarization, as the communication signal of the RF waves 980. At sub-block 1070, the wireless power communication system 900 performs an amplitude modulation of the RF waves 960. At sub-block 1075, wireless power communication system 900 performs other communication modulations on the RF waves 960, for example quadrature amplitude modulation (QAM).

Thus, the wireless power communication system 900 operating according to the method 1000 includes the technical effects, advantages, and benefits of communications between the air device 901a and the wireless power communication system 900 without jamming, obstructing, crippling, or destroying sensitive communication circuits of the air device 901a while the RF waves 960 are delivered to the air device 901a.

According to one or more embodiments, a wireless power transmission system is provided. The wireless power transmission system includes a controller and a transmitter array. The transmitter array includes at least one first antenna configured to deliver power to a mobile electronic device (e.g., a drone) and at least one second antenna. The at least one second antenna is configured to receive, as a downlink, a bit pattern communication within a backscattered signal from the mobile electronic device while the power is delivered. The at least one second antenna is configured to send, as an uplink, a communication signal to the mobile electronic device while a power is delivered.

According to one or more embodiments or any of the wireless power communication system herein, the mobile electronic device can be configured to generate the backscattered signal via a backscatter operation.

According to one or more embodiments or any of the wireless power communication system herein, the backscatter operation can comprise the one or more antennas utilizing incident radio-frequency signal of the power to transmit the backscattered signal.

According to one or more embodiments or any of the wireless power communication system herein, the transmitter array can be configured to receive a beacon and capture phases to calibrate the transmitter array to receive the backscattered signal from the mobile electronic device.

According to one or more embodiments or any of the wireless power communication system herein, the transmitter array can be configured to modulate a power signal frequency of the communication signal.

According to one or more embodiments or any of the wireless power communication system herein, the transmitter array can be configured to modify a vertical and horizontal polarization power strength of the communication signal.

It is to be understood that the present invention is not limited to the embodiments described above, but encompasses any and all embodiments within the scope of the following claims.

## Claims

1. A wireless power communication system comprising:
a controller; and
a transmitter array comprising:
at least one first antenna configured to deliver power to a mobile electronic device;
at least one second antenna configured to:
receive a downlink comprising a bit pattern communication within a backscattered signal from the mobile electronic device while the power is being delivered; and
send an uplink comprising a communication signal to the mobile electronic device while the power is being delivered.

2. The wireless power communication system of claim 1, wherein the mobile electronic device is configured to generate the backscattered signal via a backscatter operation.

3. The wireless power communication system of claim 2, wherein the backscatter operation comprises utilizing incident radio-frequency signal of the power to transmit the backscattered signal.

4. The wireless power communication system of claim 1, wherein the transmitter array is configured to receive a beacon and capture phases to calibrate the transmitter array to receive the backscattered signal from the mobile electronic device.

5. The wireless power communication system of claim 1, wherein the transmitter array is configured to modulate a power signal frequency of the communication signal.

6. The wireless power communication system of claim 1, wherein the transmitter array is configured to modify a vertical and horizontal polarization power strength of the communication signal.

7. The wireless power communication system of claim 1, wherein the mobile electronic device comprises a drone.

8. A transmitter array comprising:
at least one first antenna configured to deliver power to a mobile electronic device;
at least one second antenna configured to:
receive, as a downlink, a bit pattern communication within a backscattered signal from the mobile electronic device while the power is delivered, and
send, as an uplink, a power to the mobile electronic device while the power is delivered.

9. The transmitter array of claim 8, wherein the mobile electronic device is configured to generate the backscattered signal via a backscatter operation.

10. The transmitter array of claim 9, wherein the backscatter operation comprises utilizing incident radio-frequency signal of the power to transmit the backscattered signal.

11. The transmitter array of claim 8, wherein the transmitter array is configured to receive a beacon and capture phases to calibrate the transmitter array to receive the backscattered signal from the mobile electronic device.

12. The transmitter array of claim 8, wherein the transmitter array is configured to modulate a power signal frequency of the communication signal.

13. The transmitter array of claim 8, wherein the transmitter array is configured to modify a vertical and horizontal polarization power strength of the communication signal.

14. The transmitter array of claim 8, wherein the mobile electronic device comprises a drone.

15. A method comprising:
delivering, by at least one first antenna of a transmitter array, power to a mobile electronic device;
receiving, by at least one second antenna of the transmitter array, a downlink comprising a bit pattern communication within a backscattered signal from the mobile electronic device while the power is being delivered; and
sending, by at least one second antenna of the transmitter array, an uplink comprising a communication signal to the mobile electronic device while the power is being delivered.

16. The method of claim 15, wherein the mobile electronic device is configured to generate the backscattered signal via a backscatter operation, and
wherein the backscatter operation comprises the one or more antennas utilizing incident radio-frequency signal of the power to transmit the backscattered signal.

17. The method of claim 15, wherein the transmitter array is configured to receive a beacon and capture phases to calibrate the transmitter array to receive the backscattered signal from the mobile electronic device.

18. The method of claim 15, wherein the transmitter array is configured to modulate a power signal frequency of the communication signal.

19. The method of claim 15, wherein the transmitter array is configured to modify a vertical and horizontal polarization power strength of the communication signal.

20. The method of claim 15, wherein the mobile electronic device comprises a drone.
